# EUROPEAN PATENT SPECIFICATION

(11) **EP 1 226 569 B1**
(45) Date of publication and mention of the grant of the patent: **08.10.2003**
(21) Application number: 99969254.4
(22) Date of filing: 29.10.1999
(51) Int. Cl.: G09B 9/00, G09B 9/32, G09B 9/36

(54) **LOW LIGHT VIEWER WITH IMAGE SIMULATION**
SICHTGERÄT FÜR SCHWACHE LICHTVERHÄLTNISSE MIT BILDSIMULATION
VISEUR A BAS NIVEAU DE LUMIERE ET A SIMULATION D'IMAGES

(43) Date of publication of application: 31.07.2002
(73) Proprietor: Microvision, Inc., Bothell, WA 98011 (US)
(72) Inventor: NESTOROVIC, Nenad, Seattle, WA 98103 (US); TEGREENE, Clarence, T., Seattle, WA 98115 (US); WILLEY,Stephen R., Bellevue, WA 98005 (US)
(74) Representative: Botti, Mario
(86) International application number: US9925513
(87) International publication number: WO01033531

(56) References cited:
- WO-A-94/01850
- US-A- 4 202 601
- US-A- 5 267 061
- US-A- 5 347 119
- US-A- 5 380 204
- US-A- 5 420 414
- US-A- 5 467 104
- US-A- 5 557 444
- US-A- 5 596 339

## Description

### Technical Field

The present invention relates to low light viewing systems and, more particularly, to low light viewing systems that produce simulated images for a user.

### Background of the Invention

Low light vision devices are widely used in a variety of applications, such as night vision goggles ("NVGs"). NVGs allow military, police, or other persons to view objects in nighttime or low light environments.

A typical night vision goggle employs an image intensifier tube (IIT) that produces a visible image in response to light from the environment. To produce the visible image, the image intensifier tube converts visible or non-visible light from the environment to visible light at a wavelength readily perceivable by a user.

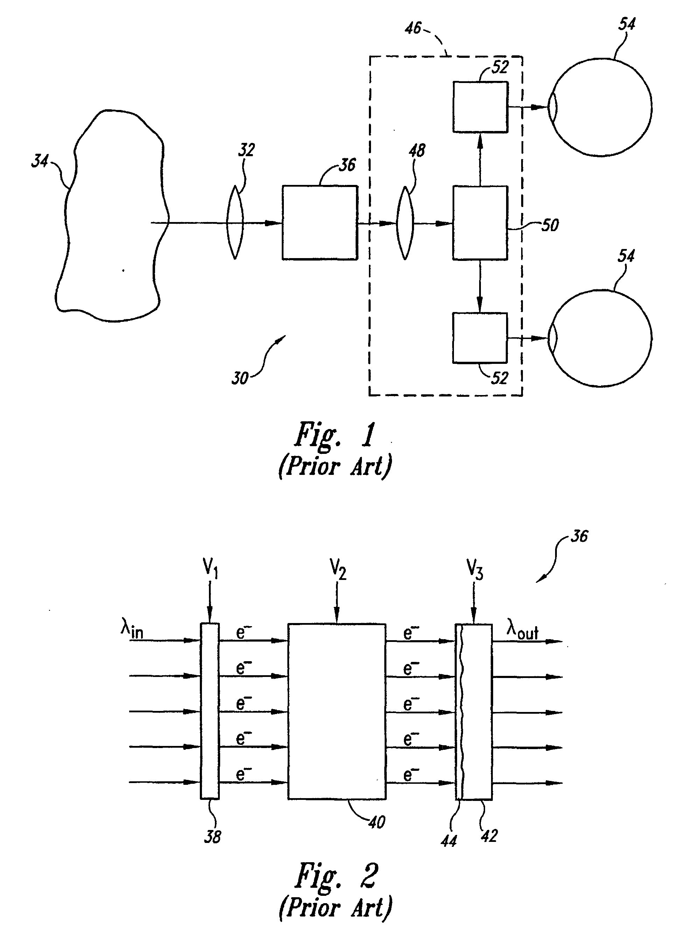

One prior art NVG 30, shown in Figure 1, includes an input lens 32 that couples light from an external environment 34 to an IIT 36. The IIT 36 is a commercially available device, such as the G2 or G3 series of IITs available from Edmonds Scientific. As shown in Figure 2, the IIT 36 includes a photocathode 38 that outputs electrons responsive to light at an input wavelength λ_{IN}. The electrons enter a microchannel plate 40 that accelerates and/or multiplies the electrons to produce higher energy electrons at its output. Upon exiting the microchannel plate 40, the higher energy electrons strike a screen 42 coated with a cathodoluminescent layer 44, such as a green phosphor. The cathodoluminescent layer 44 responds to the electrons by emitting visible light in regions where the electrons strike the screen 42. The light from the cathodoluminescent layer 44 thus forms the output of the IIT 36.

Returning to Figure 1, the visible light from the cathodoluminescent layer 44 travels to eye coupling optics 46 that include an input lens 48, a beam splitter 50, and respective eyepieces 52. The lens 48 couples the visible light to the beam splitter 50 that, in turn, directs portions of the visible light to each of the eyepieces 52. Each of the eyepieces 52 turns and shapes the light for viewing by a respective one of the user's eyes 54.

As is known, common photocathodes are often quite sensitive in the IR or near-IR ranges. This high sensitivity allows the photocathode to produce electrons at very low light levels, thereby enabling the IIT 36 to produce output light in very low light conditions. For example, some NVGs can produce visible images of an environment with light sources as dim or dimmer than starlight.

Often, users must train to properly and effectively operate in low vision environments using NVGs for vision. For example, the lenses 48, IIT 36 and eyepieces 52 may induce significant distortion in the viewed image. Additionally, the screen 42 typically outputs monochrome light with limited resolution and limited contrast. Moreover, NVGs often have a limited depth of field and a narrow field of view, giving the user a perception of "tunnel vision." The overall optical effects of distortion, monochromaticity, limited contrast, limited depth of field and limited field of view often require users to practice operating with NVGs before attempting critical activities.

In addition to optical effects, users often take time to acclimate to the physical presence of NVGs. For example, the NVG forms a mass that is displaced from the center of mass of the user's head. The added mass induces forces on the user that may affect the user's physical movements and balance. Because the combined optical and physical effects can degrade a user's performance significantly, some form of NVG training is often required before the user engages in difficult or dangerous activities.

One approach to training, described in U.S. Patent No. 5,420,414, replaces an IIT with a fiber rod that transmits light from an external environment to the user. The fiber rod is intended to limit the user's depth perception while allowing the user to view an external environment through separate eyepieces of a modified NVG. The fiber rod system requires the IIT to be removed and does not provide light at the output wavelength of the cathodoluminescent layer. Additionally, the fiber rod system does not appear to provide a way to provide electronically generated images.

An alternative approach to the fiber rod system is to project an electronically generated IR or near-IR image onto a large screen that substantially encircles the user. The user then views the screen through the NVG. This system has several drawbacks including limiting the user's movement and orientation to locations where the screen is visible through the NVG.

Moreover, typical large screen systems utilize projected light to produce the screen image. One of the simplest and most effective approaches to projecting light onto a large surrounding screen is to locate the projecting source near the center of curvature of the screen. Unfortunately, for such location, the user may interrupt the projected light as the user moves about the artificial environment. To avoid such interruption, the environment may use more than one source or position the light source in a location that is undesirable from an image generation point of view.

U.S. Patent No. 5,267,061 discloses a viewing system that allows two or more viewers to simultaneously perceive different images from the same display. The display simultaneously projects one image with light having one wavelength and another image with light having a different wavelength. To perceive only one of the images, each user looks through an NVG that includes a filter that transmits the wavelength forming one of the images while blocking or absorbing the wavelength forming the other image. Consequently, the two users view the same display yet perceive different images.

### Summary of the Invention

According to the present invention, there are provided a night vision training environment as defined in appended claim 1 and a method of simulating operation in a low light environment according to claim 14.
Preferred embodiments of the invention are defined in the dependent claims.

### Brief Description of the Figures

Figure 1 is a diagrammatic representation of a prior art low light viewer, including an image intensifier tube (IIT) and associated optics.
Figure 2 is a detail block diagram of the IIT of Figure 1.
Figure 3 is a diagram of a combined image perceived by a user resulting from the combination of light from an image source and light from a background.
Figure 4 is a diagrammatic representation of a night vision simulator including an infrared beam scanned onto a night vision goggle input.
Figure 5 is a side elevational view of a head-mounted night vision simulator including a tethered IR source
Figure 6 is a schematic of an IR scanning system suitable for use as the image source in the display of Figure 2.
Figure 7 is a diagrammatic view of an embodiment of a simulator including a LCD panel with an infrared back light.
Figure 8 is a diagrammatic view of an embodiment of a simulator including an FED emitter.
Figure 9 is a top plan view of a simulation environment including a plurality of users and a central control system including a computer controller and rf links.
Figure 10 is a diagrammatic view of an embodiment of a display including a scanned light beam activating a wavelength converting phosphor and a reflected visible beam.
Figure 11 is a diagrammatic representation of an embodiment of a head mounted display including a scanned non-visible light beam activating a wavelength converting phosphor to produce a visible image.
Figure 12 is a top plan view of a bi-axial MEMS scanner for use in the display of Figure 4.

### Detailed Description of the Invention

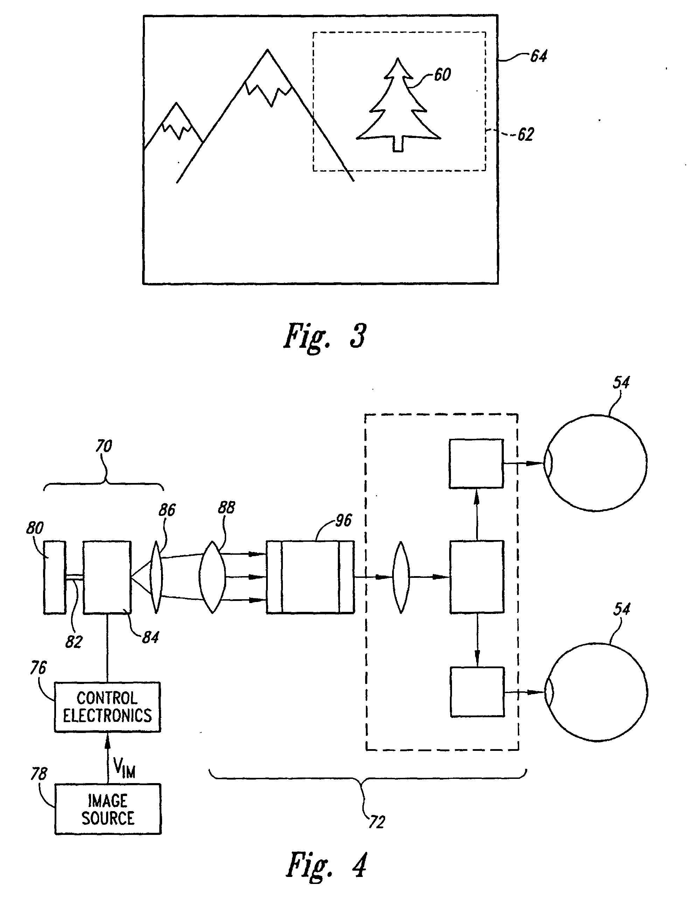

A variety of techniques are available for providing visual displays of graphical or video images to a user. Recently, very small displays have been developed for partial or augmented view applications. In such applications, the display is positioned to produce an image 60 in a region 62 of a user's field of view 64, as shown in Figure 3. The user can thus see both a displayed image 66 and background information 68.

One example of a small display is a scanned beam display such as that described in U. S. Patent No. 5,467,104 of Furness et al., entitled VIRTUAL RETINAL DISPLAY, which is incorporated herein by reference. In scanned displays, a scanner, such as a scanning mirror or acousto-optic scanner, scans a modulated light beam onto a viewer's retina. The scanned light enters the eye through the viewer's pupil and is imaged onto the retina by the cornea. The user perceives an image corresponding to the modulated light image onto the retina. Other examples of small displays include miniature liquid crystal displays (LCDs), field emission displays (FEDs), plasma displays and miniature cathode ray tube-based displays (CRTs). Each of these other types of displays is well known in the art.

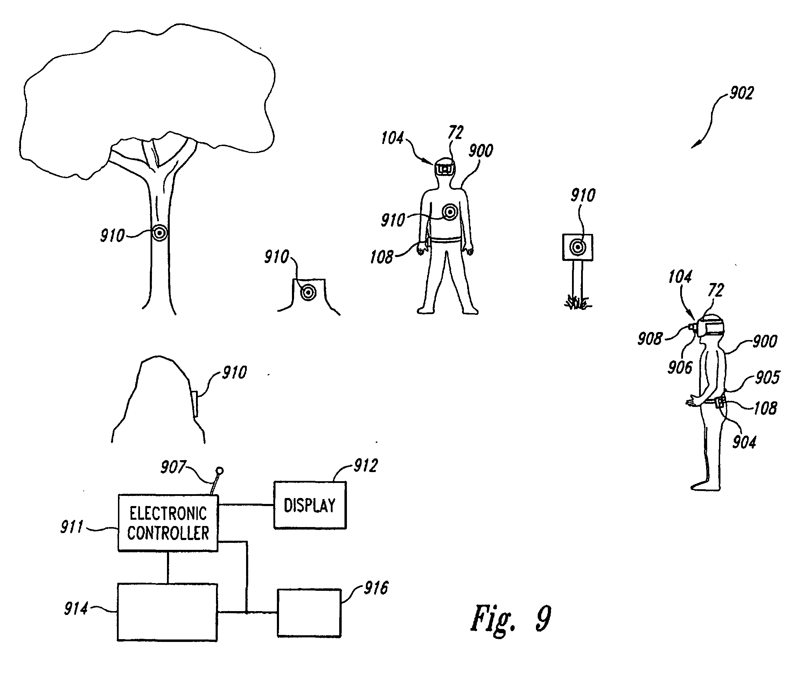

As will be described herein, these miniature displays can be adapted to activate light emitting materials to produce visible images at selected wavelengths different from the wavelengths of miniature display. For example, such miniature displays can activate the cathodoluminescent material of NVGs to produce a perceived image that simulates the image perceived when the NVGs are used to view a low light image environment. A first embodiment of such a system, shown in Figure 4, includes an IR scanned light beam display 70 positioned to scan a beam for input to an NVG 72. Responsive to light from the IR display 70, the NVG 72 outputs visible light for viewing by the viewer's eyes 54. The IR display 70 includes four principal portions, each of which will be described in greater detail below. First, control electronics 76 provide electrical signals that control operation of the display 70 in response to an image signal V_{IM} from an image source 78, such as a computer, television receiver, videocassette player, or similar device. While the block diagram of Figure 4 shows the image source 78 connected directly to the control electronics 76, one skilled in the art will recognize other approaches to coupling the image signal V_{IM} to the control electronics 76. For example, where the user is intended to move freely, a rf transmitter and receiver can communicate the image signal V_{IM} as will be described below with reference to Figure 9. Alternatively, where the control electronics 76 are configured for low power consumption, such as in a man wearable computer, the control electronics 76 may be carried by the user and powered by a battery.

The second portion of the display 70 includes a light source 80 that outputs a modulated light beam 82 having a modulation corresponding to information in the image signal V_{IM}. The light source 80 may include a directly modulated light emitter such as a laser diode or light emitting diode (LED) or may be include a continuous light emitter indirectly modulated by an external modulator, such as an acousto-optic modulator. While the light source 80 preferably emits IR or near-IR light, other wavelengths may be used for certain applications. For example, in some cases, the NVG 72 may use phosphors having sensitivity at other wavelengths (e.g., visible or ultraviolet). In such cases, the wavelength of the source 80 may be selected to correspond to the phosphor.

The third portion of the display 70 is a scanner assembly 84 that scans the modulated beam 82 of the light source 80 through a two-dimensional scanning pattern, such as a raster pattern. One example of such a scanner assembly is a mechanically resonant scanner, such as that described U.S. Patent No. 5,557,444 to Melville et al., entitled MINIATURE OPTICAL SCANNER FOR A TWO-AXIS SCANNING SYSTEM, which is incorporated herein by reference. However, other scanning assemblies, such as microelectromechanical (MEMs) scanners and acousto-optic scanners may be within the scope of the invention. A MEMs scanner is preferred in some applications due to its low weight and small size. Such scanners may be uniaxial or biaxial. An example of one such MEMs scanner is described in U. S. Patent No. 5,629,790 to Neukermans, et al entitled MICROMACHINED TORSIONAL SCANNER, which is incorporated herein by reference. Because the light source 80 and scanner assembly 84 can operate with relatively low power, a portable battery pack can supply the necessary electrical power for the light source 80, the scanner assembly 84 and, in some applications, the control electronics 76.

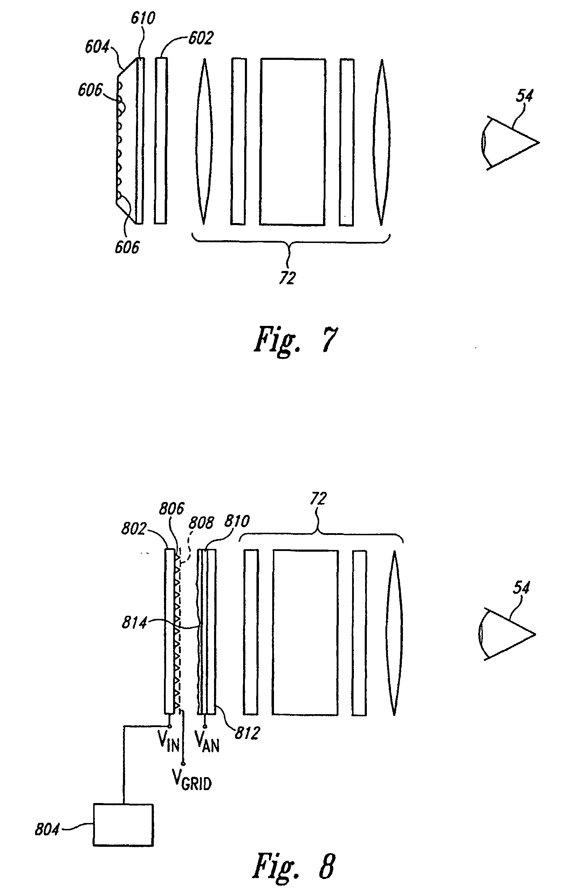

Imaging optics 86 form the fourth portion of the display 70. While the imaging optics 86 are represented in Figure 4 as a single lens, one skilled in the art will recognize that the imaging optics 86 may be more complicated, for example when the beam 82 is to be focused or shaped. For example, the imaging optics 86 may include more than one lens or diffractive optical elements. In other cases, the imaging optics may be eliminated completely or may utilize an input lens 88 of the NVG 72. Also, where alternative structures, such as an LCD panel or field emission display structure (as described below with reference to Figures 7 and 8), replace the image source 78 and scanner assembly 84, the imaging optics 86 may be modified according to known principles.

The imaging optics 86 output the scanned beam 82 onto the input lens 88 or directly onto an IIT 96 of the NVG 72. The NVG 72 responds to the scanned beam 82 and produces visible light for viewing by the user's eye 54, as described above.

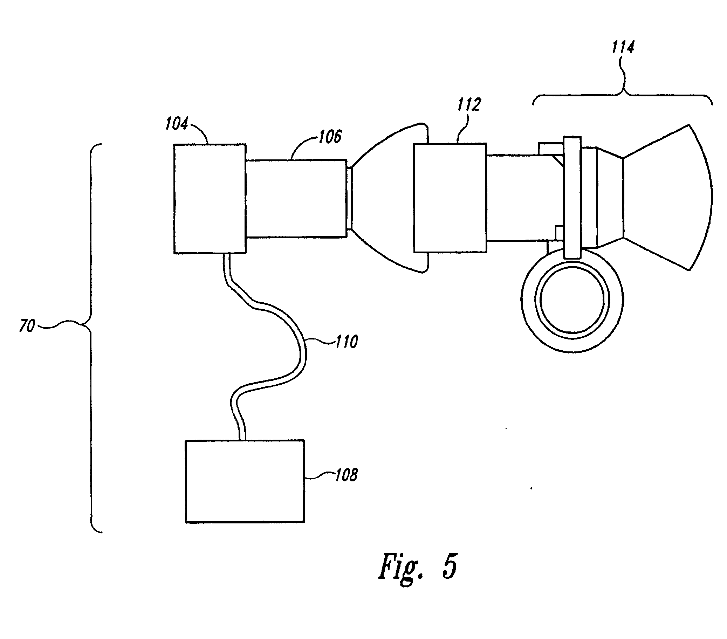

Although the elements here are presented diagrammatically, one skilled in the art will recognize that the components are typically sized and configured for mounting directly to the NVG 72, as shown in Figure 5. In this embodiment, a first portion 104 of the display 70 is mounted to a lens frame 106 and a second portion 108 is carried separately, for example in a hip belt. The portions 104, 108 are linked by a fiber optic and electronic tether 110 that carries optical and electronic signals from the second portion 108 to the first portion 104. An example of a fiber-coupled scanning display is found in U.S. Patent No. 5,596,339 of Furness et. al., entitled VIRTUAL RETINAL DISPLAY WITH FIBER OPTIC POINT SOURCE which is incorporated herein by reference. One skilled in the art will recognize that, in applications where the control electronics 76 (Figure 3) are small, the light source may be incorporated in the first portion 104 and the tether 110 can be eliminated.

When the first portion 104 is mounted to the lens frame 106, the lens frame 106 couples infrared light from the first portion to the IIT 112. The IIT 112 converts the infrared light to visible light that is presented to a user by the eyepieces 114.

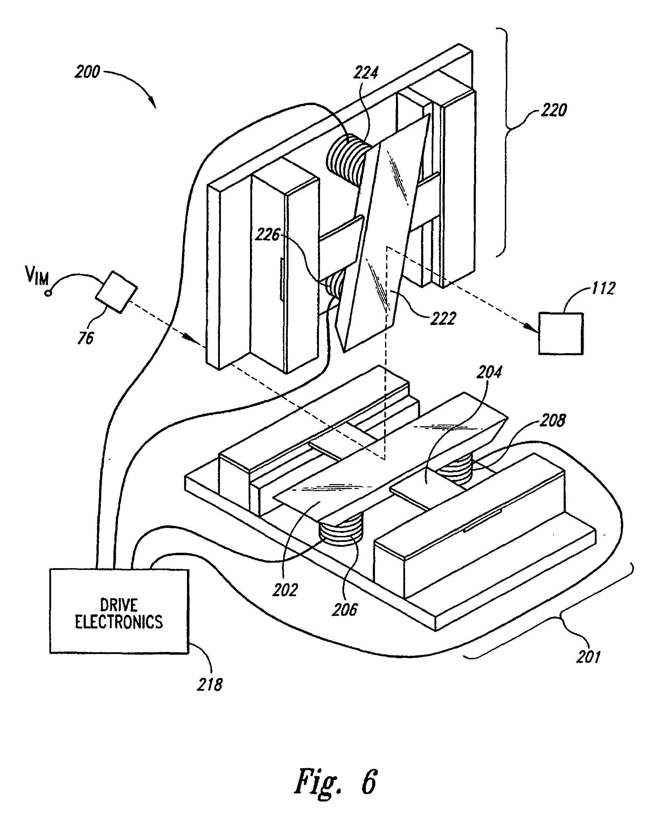

Figure 6 shows one embodiment of a mechanically resonant scanner 200 suitable for use as the scanner assembly 84. The resonant scanner 200 includes as the principal horizontal scanning element, a horizontal scanner 201 that includes a moving mirror 202 mounted to a spring plate 204. The dimensions of the mirror 202 and spring plate 204 and the material properties of the spring plate 204 are selected so that the mirror 202 and spring plate 204 have a natural oscillatory frequency on the order of 1-100 kHz. A ferromagnetic material mounted with the mirror 202 is driven by a pair of electromagnetic coils 206, 208 to provide motive force to mirror 202, thereby initiating and sustaining oscillation. Drive electronics 218 provide electrical signal to activate the coils 206, 208.

Vertical scanning is provided by a vertical scanner 220 structured very similarly to the horizontal scanner 201. Like the horizontal scanner 201, the vertical scanner 220 includes a mirror 222 driven by a pair of coils 224, 226 in response to electrical signals from the drive electronics 218. However, because the rate of oscillation is much lower for vertical scanning, the vertical scanner 220 is typically not resonant. The mirror 222 receives light from the horizontal scanner 201 and produces vertical deflection at about 30-100 Hz. Advantageously, the lower frequency allows the mirror 222 to be significantly larger than the mirror 202, thereby reducing constraints on the positioning of the vertical scanner 220. The details of virtual retinal displays and mechanical resonant scanning are described in greater detail in U.S. Patent No. 5,557,444 of Melville, et al., entitled MINIATURE OPTICAL SCANNER FOR A TWO AXIS SCANNING SYSTEM which is incorporated herein by reference.

Alternatively, the vertical mirror may be mounted to a pivoting shaft and driven by an inductive coil. Such scanning assemblies are commonly used in bar code scanners. As will be discussed below, the vertical and horizontal scanner can be combined into a single biaxial scanner in some applications.

In operation, the light source 80, driven by the image source 78 (Figure 4) outputs a beam of light that is modulated according to the image signal. At the same time, the drive electronics 218 activate the coils 206, 208, 224, 226 to oscillate the mirrors 202, 222. The modulated beam of light strikes the oscillating horizontal mirror 202, and is deflected horizontally by an angle corresponding to the instantaneous angle of the mirror 202. The deflected light then strikes the vertical mirror 222 and is deflected at a vertical angle corresponding to the instantaneous angle of the vertical mirror 222. The modulation of the optical beam is synchronized with the horizontal and vertical scans so that at each position of the mirrors, the beam color and intensity correspond to a desired image. The beam therefore "draws" the virtual image directly upon the IIT 112 (Figure 4). One skilled in the art will recognize that several components of the scanner 200 have been omitted for clarity of presentation. For example, the vertical and horizontal scanners 201, 220 are typically mounted in fixed relative positions to a frame. Additionally, the scanner 200 typically includes one or more turning mirrors that direct the beam such that the beam strikes each of the mirrors 202, 222 at the appropriate angle. For instance, the turning mirror may direct the beam so that the beam strikes one or both of the mirrors 202, 222 a plurality of times to increase the effective angular range of optical scanning.

One skilled in the art will recognize that a variety of other image sources, such as LCD panels and field emission displays, may be adapted for use in place of the scanner assembly 84 and light source 80. For example, as shown in Figure 7, an alternative embodiment of an NVG simulator 600 is formed from a LCD panel 602, an IR back light 604, and the NVG 72. The IR back light 604 is formed from an array of IR sources 606, such as LEDs or laser diodes, a backreflector 608 and a diffuser 610. One skilled in the art will recognize a number of other structures that can provide infrared or other light for spatial modulation by the LCD panel.

The LCD panel 602 is structured similarly to conventional polarization-based LCD panels, except that the characteristics of the liquid crystals and polarizers are adjusted for response at IR wavelengths. The LCD panel 602 is addressed in a conventional manner to activate each location in a two-dimensional array. At locations where the image is intended to include IR light, the LCD panel selectively passes the IR light from the back light 604 to the NVG 72. The NVG 72 responds as described above by emitting visible light for viewing by the user's eye 54.

As shown in Figure 8, another embodiment according to the invention utilizes a field emission display structure to provide an input to the NVG 72. In this embodiment, an emitter panel 802 receives control signals from FED drive electronics 804 and emits electrons in response. The emitter panel 802 may be any known emitter panel, such as those used in commercially available field emission displays. In the typical emitter panel configuration shown in Figure 8, the emitter panel 802 is formed from an array of emitter sets 806 aligned to an extraction grid 808. The emitter sets 806 typically are a group of one or more commonly connected emissive discontinuities or "tips" that emit electrons when subjected to high electric fields. The extraction grid 808 is a conductive grid of one or more conductors. When the drive electronics 804 induce a voltage difference between an emitter set 806 and a surrounding region of the extraction grid 808, the emitter set 806 emits electrons. By selectively controlling the voltage between each emitter set 806 and the surrounding region of the grid 808, the drive electronics 804 can control the location and rate of electrons being emitted.

A high voltage anode 810 carried by a transparent plate 812 attracts the emitted electrons. As the electrons travel to the plate 812 they strike a cathodoluminescent coating 814 that covers the anode 810. In response, the cathodoluminescent coating 814 emits infrared light in the impacted region with an intensity that corresponds to the rate at which electrons strike the region. The infrared light passes through the plate 812 and enters the NVG 72. Because the drive electronics 804 establish the rate and location of the emitted electrons according to the image signal, the infrared light also corresponds to the image signal. As before, the NVG 72 emits visible light responsive to the infrared light for viewing by the user's eye 54.

As shown in Figure 9, human participants 900 may use the display 70 of Figure 5 in a simulation environment 902 that permits substantially unbounded movement. In this embodiment, the participants 900 carry the display 70 with the second portion 108 secured around the waist and the first portion 104 mounted to a head-borne NVG 72. The first portion 104 additionally includes a position monitor 906 and a gaze tracker 908 that identify the participant's positions in the environment and the orientation of the user's gaze.

One skilled in the art will recognize a number of realizable position trackers, such as acoustic sensors and optical sensors. Moreover, although the position monitor 906 is shown as being carried by the participant 900, the position monitor 906 may alternatively be fixedly positioned in or around the environment or may include a mobile portion and a fixed portion. Similarly, a variety of gaze tracking structures may be utilized. In the embodiment of Figure 9, the gaze tracker utilizes a plurality of fiducial reflectors 910 positioned throughout the environment 902 or on the participants 900. To detect position, the gaze tracker 908 emits one or more IR beams outwardly into the environment 902. The IR beams may be generated by the image source 78, or from separate IR sources mounted to the first portion 104. The emitted IR beams strike the fiducial 910 and are reflected. Because each of the fiducials 910 has a distinct, identifiable pattern of spatial reflectivity, the reflected light is modulated in a pattern corresponding to the particular fiducial 910. A detector mounted to the first portion 104 receives the reflected light and produces an electrical signal indicative of the reflective pattern of the fiducial 910. The tether 110 carries the electrical signal to the second portion 108.

The second portion 108 includes an rf transceiver 904 with a mobile antenna 905 that transmits data corresponding to the detected reflected light and status information to an electronic controller 911. The electronic controller 911 is a microprocessor-based system that determines the desired image under control of a software program. The controller 911 receives information about the participants' locations, status, and gaze directions from the transceivers 904 through a base antenna 907. In response, the controller 911 identifies appropriate image data and transmits the image data to the transceiver 904. The second portion 108 then provides signals to the first portion 104 through the tether, causing the scanner assembly 84 and image source 78 to provide IR input to the NVG 72. The participants 900 thus perceive images through the NVG 72 that correspond to the participants' position and gaze direction.

To allow external monitoring of activity in the environment, a display 912 coupled to the electronic controller 911 presents images of the environment, as viewed by the participants 900. A scenario input device 914, such as a CD-ROM, magnetic disk, video tape player or similar device, and a data input device 916, such as a keyboard or voice recognition module, allow the action within the environment 902 to be controlled and modified as desired.

Although the embodiments herein are described as using scanned infrared light, the invention is not necessarily so limited. For example, in some cases it may be desirable to scan ultraviolet or visible light onto a photonically activated screen. Ultraviolet light scanning may be particularly useful for scanning conventional visible phosphors, such as those found in common fluorescent lamps or for scanning known up-converting phosphors.

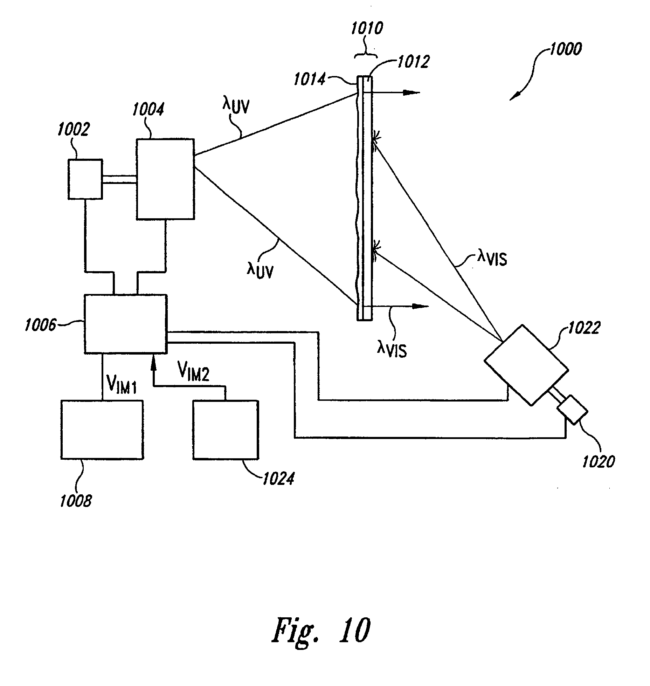

An example of such a structure is shown in Figure 10 where a scanned beam display 1000 is formed from a UV light source 1002 aligned to a scanner assembly 1004. The UV source 1002 may be a discrete laser, laser diode or LED that emits UV light.

Control electronics 1006 drive the scanner assembly 1004 through a substantially raster pattern. Additionally, the control electronics 1006 activate the UV source 1002 responsive to an image signal from an image input device 1008, such as a computer, rf receiver, FLIR sensor, videocassette recorder, or other conventional device.

The scanner assembly 1004 is positioned to scan the UV light from the UV source 1002 onto a screen 1010 formed from a glass or plexiglas plate 1012 coated by a phosphor layer 1014. Responsive to the incident UV light, the phosphor layer 1014 emits light at a wavelength visible to the human eye. The intensity of the visible light will correspond to the intensity of the incident UV light, which will in turn, correspond to the image signal. The viewer thus perceives a visible image corresponding to the image signal. One skilled in the art will recognize that the screen 1010 effectively acts as an exit pupil expander that eases capture of the image by the user's eye, because the phosphor layer 1014 emits light over a large range of angles, thereby increasing the effective numerical aperture.

In addition to the scanned UV source, the embodiment of Figure 10 also includes a visible light source 1020, such as a red laser diode, and a second scanner assembly 1022. The control electronics 1006 control the second scanner assembly 1022 and the visible light source 1020 in response to a second image signal from a second image input device 1024.

In response to the control electronics, the second scanner assembly 1022 scans the visible light onto the screen 1010. However, the phosphor is selected so that it does not emit light of a different wavelength in response to the visible light. Instead, the phosphor layer 1014 and the plate 1012 are structured to diffuse the visible light. The phosphor layer 1014 and plate 1012 thus operate in much the same way as a commercially available diffuser, allowing the viewer to see the red image corresponding to the second image signal.

In operation, the UV and visible light sources 1002, 1020 can be activated independently to produce two separate images that may be superimposed. For example, in an aircraft the UV source 1002 can present various data or text from a sensor, such as an altimeter, while the visible source 1020 can be activated to display FLIR warnings.

Although the display of Figure 10 is presented as including two separate scanner assemblies 1004, 1022, one skilled in the art will recognize that by aligning both sources to the same scanner assembly, a single scanner assembly can scan both the UV light and the visible light. One skilled in the art will also recognize that the invention is not limited to UV and visible light. For example, the light sources 1002, 1020 may be two infrared sources if an infrared phosphor or other IR sensitive component is used. Alternatively, the light sources 1002, 1020 may include an infrared and a visible source or an infrared source and a UV source.

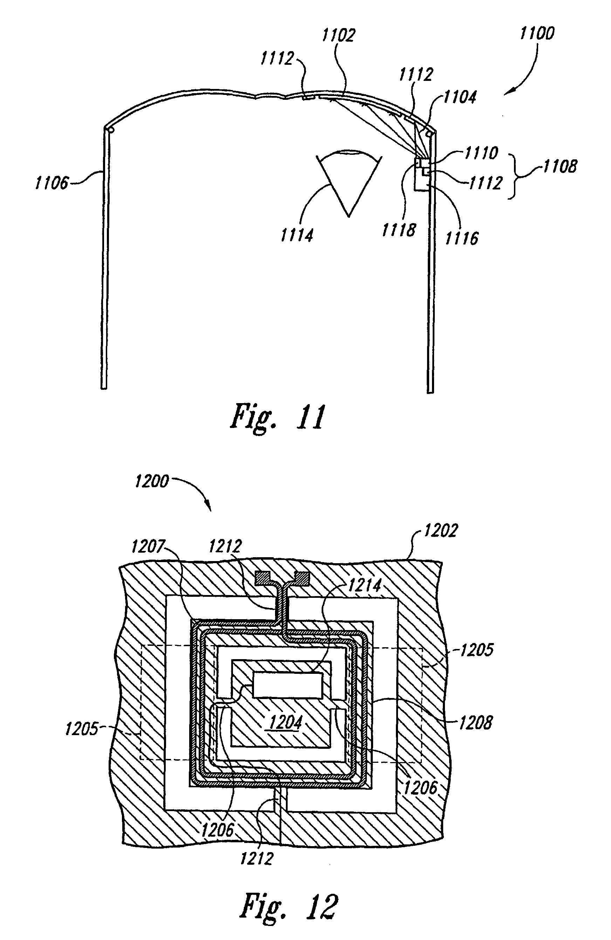

Scanning light of a first wavelength onto a wavelength converting medium, such as a phosphor, is not limited to night vision applications. For example, as shown in Figure 11, a scanned light beam head mounted display (HMD) 1100 includes a phosphor plate 1102 activated by a scanned light beam 1104 to produce a viewing image for a user. The HMD 1100 may be used as a general purpose display, rather than as a night vision aid.

In this embodiment, the HMD 1100 includes a frame 1106 that is configured similarly to conventional glasses so that a user may wear the HMD 1100 comfortably. The frame 1106 supports the phosphor plate 1102 and an image source 1108 in relative alignment so that the light beam strikes the phosphor plate 1102. The image source 1108 includes a directly modulated laser diode 1112 and a small scanner 1110, such as a MEMs scanner, that operate under control of an electronic control module 1116. The laser diode 1112 preferably emits non-visible light such as an infrared or ultraviolet light. However, other wavelengths, such as red or near-UV may be used in some applications.

The scanner 1110 is a biaxial scanner that receives the light from the diode 1112 and redirects the light through a substantially raster pattern onto the phosphor plate 1102. Responsive to the scanned beam 1104, the phosphor on the phosphor plate 1102 emits light at visible wavelengths. The visible light travels to the user's eye 1114 and the user sees an image corresponding to the modulation of the scanned beam 1104.

The image may be color or monochrome, depending upon patterning of the phosphor plate. For a color display, the phosphor plate 1102 may include interstitially located lines, each containing a respective phosphor formulated to emit light at a red, green or blue wavelength, as shown in Figure 12. The control module 1116 controls the relative intensity of the scanned light beam for each location to produce the appropriate levels of red, green and blue for the respective pixel.

To maintain synchronization of the light beam modulation with the lateral position, the HMD 1100 uses an active feedback control with one or more sensor high-speed photodiodes 1118 mounted adjacent to the scanner 1110. Small reflectors 1120 mounted to the phosphor plate 1102 reflect an end portion of the scanned beam 1104 back to the photodiodes 1118 at the end of each horizontal scan. Responsive to the reflected light, the photodiodes 1118 provide an electrical error signal to the control module 1116 indicative of the phase relationship between the beam position and the beam modulation. In response, the control module 1116 adjusts the timing of the image data to insure that the diode 1112 is modulated appropriately for each scanning location.

To reduce the size and weight of the first portion 104, it is desirable to reduce the size and weight of the scanning assembly 58. One approach to reducing the size and weight is to replace the mechanical resonant scanners 200, 220 with a microelectromechanical (MEMS) scanner, such as that described in U.S. Patent No. 5,629,790 entitled MICROMACHINED TORSIONAL SCANNER to Neukermans et al and U.S. Patent No. 5,648,618 entitled MICROMACHINED HINGE HAVING AN INTEGRAL TORSION SENSOR to Neukermans et. al, each of which is incorporated herein by reference. As described therein and shown in Figure 12, a bi-axial scanner 1200 is formed in a silicon substrate 1202. The bi-axial scanner 1200 includes a mirror 1204 supported by opposed flexures 1206 that link the mirror 1204 to a pivotable support 1208. The flexures 1206 are dimensioned to twist torsionally thereby allowing the mirror 1204 to pivot about an axis defined by the flexures 1206, relative to the support 1208. In one embodiment, pivoting of the mirror 1204 defines horizontal scans of the scanner 1200.

A second pair of opposed flexures 1212 couple the support 1208 to the substrate 1202. The flexures 1210 are dimensioned to flex torsionally, thereby allowing the support 1208 to pivot relative to the substrate 1202. Preferably, the mass and dimensions of the mirror 1204, support 1208, and flexures 1210 are selected such that the mirror resonates, at 10-40 kHz horizontally with a high Q and such that the support 1208 pivots at higher than 60 Hz.

In a preferred embodiment, the mirror 1204 is pivoted by applying an electric field between a plate 1214 on the mirror 1204 and a conductor on a base (not shown). This approach is termed capacitive drive, because of the plate 1214 acts as one plate of a capacitor and the conductor in the base acts as a second plate. As the voltage between plates increases, the electric field exerts a force on the mirror 1204 causing the mirror 1204 to pivot about the flexures 1206. By periodically varying the voltage applied to the plates, the mirror 1204 can be made to scan periodically. Preferably, the voltage is varied at the mechanically resonant frequency of the mirror 1204 so that the mirror 1204 will oscillate with little power consumption.

The support 1208 is pivoted magnetically depending upon the requirements of a particular application. Fixed magnets 1205 are positioned around the support 1208 and conductive traces 1207 on the support 1208 carry current. Varying the current varies the magnetic force on support and produces movement. Preferably, the support 1208 and flexures 1212 are dimensioned so that the support 1208 can respond at frequencies well above a desired refresh rate, such as 60Hz. One skilled in the art will recognize that capacitive or electromagnetic drive can be applied to pivot either or both of the mirror 1204 and support 1208 and that other drive mechanisms, such as piezoelectric drive may be adapted to pivot the mirror 1204 or support 1208.

Although the invention has been described herein by way of exemplary embodiments, variations in the structures and methods described herein may be made without departing from the scope of the invention as defined by the appended claims. For example, the positioning of the various components may be varied. In one example of repositioning, the UV source 1002 and visible sources 1020 may be positioned on opposite sides of the screen 1010. Moreover, although the horizontal scanner 200 is described herein as preferably being mechanically resonant at the scanning frequency, in some applications the scanner 200 may be non-resonant. For example, where the scanner 200 is used for "stroke" or "calligraphic" scanning, a non-resonant scanner would be preferred. Further, although the input signal is described as coming from an electronic controller or predetermined image input, one skilled in the art will recognize that a portable video camera (alone or combined with the electronic controller) may provide the image signal. This configuration would be particularly useful in simulation environments involving a large number of participants, since each participant's video camera could provide an image input locally, thereby reducing the complexity of the control system. Accordingly, the invention is not limited except as by the appended claims.

## Claims

1. A night vision training environment (902), comprising:
a portable night vision simulator, including:
a night vision goggle (72) having an infrared input (88);
an infrared display (70) mounted to the night vision goggle (72) and having an infrared output (86) alignable to the infrared input (88);
a receiver (904) coupled to the infrared display (70) and configured to produce input signals for the infrared display (70);
an electronic controller (911) that produces control signals for the portable night vision simulator; and
a transmitter having a signal input coupled to the electronic controller (911), the transmitter being configured to transmit to the receiver (904) signals corresponding to the control signals.

2. The night vision training environment (902) of claim 1 wherein the infrared display (70) includes:
a modulated infrared light source (80) responsive to the input signals to emit infrared light; and
a scanning assembly (84) aligned to receive the emitted infrared light and responsive to scan the received infrared light onto the night vision goggle input (88).

3. The night vision training environment (902) of claim 1 wherein the infrared display (70) includes:
an infrared emitter (604) responsive to the input signals to emit infrared light; and
an LCD panel (602) responsive to the input signals to selectively transmit the infrared light to or reflect the infrared light to the night vision goggle input (88).

4. The night vision training environment (902) of claim 3 wherein the infrared display (70) includes a field emission display, the field emission display including an infrared emissive screen (814).

5. The night vision training environment (902) of claim 1 wherein the transmitter is an rf transmitter.

6. The night vision training environment (902) of claim 1 further comprising:
a second portable night vision simulator, including:
a second night vision goggle (72) having a second infrared input (88);
a second infrared display (70) mounted to the second night vision goggle (72) and having a second infrared output (86) alignable to the second infrared input (88); and
a second receiver coupled (904) to the second infrared display (70) and configured to produce respective input signals for the second infrared display (70).

7. The night vision training environment (902) of claim 6 wherein the electronic controller (911) is programmed to provide data independently to each of the portable night vision simulators.

8. The night vision training environment (902) of claim 1 wherein the infrared input (88) of the night vision goggle (72) is operable to receive infrared energy that is not visible to a user without a view aid, the night vision goggle (72) being responsive to the infrared energy to provide visible light for viewing by the user, the visible light corresponding to the received infrared energy.

9. The night vision training environment of claim 2 wherein the light source (80) includes an infrared laser.

10. The night vision training environment of claim 9 further including an external modulator aligned to receive light from the laser and coupled to receive an image signal from an image signal source (78), the modulator being responsive to modulate the received light according an image signal from the image signal source (78).

11. The night vision training environment of claim 9 wherein the infrared laser is a laser diode.

12. The night vision training environment of claim 2 wherein the light source (80) includes an ultraviolet emitter.

13. The night vision training environment of claim 2 wherein the night vision goggle (72) is a head mounted configuration including a head mountable support and wherein the light source (80) is sized and configured for attachment to the head mountable support.

14. A method of simulating operation in a low light environment, comprising the steps of:
providing a portable, occluded night vision goggle (72) to a user;
providing an electronic controller (911);
detecting a gaze direction of the user;
in response to the detected gaze direction, identifying a portion of the low light environment; said electronic controler (911) being coupled to receive a tracking signal, indicative of the detected gaze direction, and being responsive to the tracking signal to produce output data corresponding to a selected image portion
producing an infrared light signal corresponding to the identified portion of the low light environment with an infrared source carried by the user; which is responsive to the output data from the electronic controller (911)
inputting the produced infrared light signal to the night vision goggle (72); and
producing visible light for viewing by the user with the night vision goggle (72), in response to the infrared light signal.

15. The method of claim 14 wherein the step of inputting the produced infrared light signal to the night vision goggle (72) includes scanning the infrared light signal onto an image intensifier (96 or 112) of the night vision goggle (72).

16. The method of claim 15 wherein the step of scanning the infrared light signal onto an image intensifier (96 or 112) of the night vision goggle (72) includes resonantly scanning the infrared light signal in a substantially raster pattern.

## Patentansprüche

1. Nachtsichttrainingseinrichtung (902) bestehend aus:
einem tragbaren Nachtsichtsimulator mit:
einer Nachtsichtbrille (72) mit einem Infrarot-Eingang (88):
einer an der Nachtsichtbrille (72) befestigten Infrarot-Anzeige (70) mit einem zu dem Infrarot-Eingang (88) ausrichtbaren Infrarot-Ausgang (86);
einem an dem Infrarot-Anzeige (70) angeschlossen und zur Erzeugung von Eingangssignalen für die Infrarot-Anzeige (70) konfigurierten Empfänger (904);
einem elektronischen Kontroller (911), der Steuersignale für den tragbaren Nachtsichtsimulator erzeugt und
einem Sender mit einem an den elektronischen Kontroller (911) angeschlossenen Signaleingang, wobei der Sender so konfiguriert ist, dass zu den Steuersignalen korrespondierende Signale zu dem Empfänger (904) gesendet werden.

2. Nachtsichttrainingseinrichtung (902) nach Anspruch 1 **gekennzeichnet durch** eine Infrarotanzeige (70) mit:
einer auf die Eingangssignale ansprechenden modulierten Infrarot-Lichtquelle (80) zum Emittieren von Infrarot-Licht und
einer Scannvorrichtung (84), die zum Empfang des emittierten Infrarot-Lichtes ausgerichtet ist und die zum Scannen des erhaltenen Infrarot-Lichtes auf den Nachtsichtbrillen-Eingang (88) ansprechbar ist.

3. Nachtsichttrainingseinrichtung (902) nach Anspruch 1 **gekennzeichnet durch** eine Infrarot-Anzeige (70) mit:
einem auf die Eingangssignale ansprechenden Infrarot-Emitter (604) zum Emittieren von Infrarot-Licht; und
einer auf die Eingangssignale ansprechenden LCD-Tafel (602) zum selektiven Senden von Infrarot-Licht oder Reflektieren von Infrarot-Licht zu dem Nachtsichtbrillen-Eingang (88).

4. Nachtsichttrainingseinrichtung (902) nach Anspruch 3 **gekennzeichnet durch** eine Infrarotanzeige (70) mit einer Feldemissionsanzeige, die einen infrarot emittierenden Schirm (814) beinhaltet

5. Nachtsichttrainingseinrichtung (902) nach Anspruch 1, **dadurch gekennzeichnet, dass** der Sender eine Radiofrequenz-Sender ist.

6. Nachtsichttrainingseinrichtung (902) nach Anspruch 1 weiter **gekennzeichnet durch**:
einen zweiten tragbaren Nachtsichtsimulator mit:
einer zweiten Nachtsichtbrille (72) mit einem zweiten Infrarot-Eingang (88):
einer an der zweiten Nachtsichtbrille (72) befestigten zweiten Infrarot-Anzeige (70) mit einem zu dem zweiten Infrarot-Eingang (88) ausrichtbaren zweiten Infrarot-Ausgang (86) und
einem an die zweiten Infrarot-Anzeige (70) angeschlossen und zur Erzeugung von entsprechenden Eingangssignalen für die zweite Infrarot-Anzeige (70) konfigurierten zweiten Empfänger (904).

7. Nachtsichttrainingseinrichtung (902) nach Anspruch 6, **dadurch gekennzeichnet, dass** der elektronische Kontroller (911) zur Verfügungsstellung von Daten unabhängig zu jedem Nachtsichtsimulator programmiert ist.

8. Nachtsichttrainingseinrichtung (902) nach Anspruch 1, **dadurch gekennzeichnet, dass** der Infrarot-Eingang (88) der Nachtsichtbrille (72) zum Empfang von Infrarot-Energie, die für einen Benutzer ohne Sehhilfe nicht sichtbar ist, betreibbar ist, die Nachtsichtbrille (72) zur Verfügungsstellung von sichtbaren Licht für den Benutzer auf die Infrarot-Energie anspricht und das sichtbare Licht zu der empfangenen Infrarot-Energie korrespondiert.

9. Nachtsichttrainingseinrichtung nach Anspruch 2, **dadurch gekennzeichnet. dass** die Lichtquelle (80) einen Infrarot-Laser umfasst.

10. Nachtsichttrainingseinrichtung nach Anspruch 9 weiter **gekennzeichnet durch** einen zum Empfang von Licht von dem Laser ausgerichteten und zum Empfang eines Bildsignal von einer Bildsignalquelle (78) angeschlossen externen Modulator und der Modulator zur Modulation des empfangenen Lichtes gemäß dem Bildsignal von der Bildsignalquelle (78) ansprechbar ist.

11. Nachtsichttrainingseinrichtung nach Anspruch 9, **dadurch gekennzeichnet, dass** der Infrarot-Laser eine Laserdiode.

12. Nachtsichttrainingseinrichtung nach Anspruch 2, **dadurch gekennzeichnet, dass** die Lichtquelle (80) einen Ultraviolett-Emitter umfasst.

13. Nachtsichttrainingseinrichtung nach Anspruch 2, **dadurch gekennzeichnet, dass** die Nachtsichtbrille (72) eine am Kopf befestigbare Anordnung mit einem am Kopf befestigbaren Tragelement ist und dass die Lichtquelle (80) für eine Befestigung an dem am Kopf befestigbaren Tragelement skaliert und konfiguriert ist.

14. Verfahren für einen Simulationsbetrieb in einer Restlicht-Umgebung umfassend die Schritte:
zur Verfügung Stellen einer tragbaren, abgedeckten Nachtsichtbrille (72) an einen Benutzer;
zur Verfügung Stellen eines elektronischen Kontrollers (911);
Feststellen einer Blickrichtung des Benutzers;
Identifizieren eines Teils der Restlicht-Umgebung in Reaktion auf die festgestellte Blickrichtung des Benutzers; wobei dieser elektronische Kontroller (911) zum Empfang eines auf die festgestellte Blickrichtung des Benutzers hindeutenden Zielführungssignals angeschlossen ist und von dem Zielführungssignal zur Erzeugung von zu einem ausgewählten Bildteil korrespondieren Ausgangsdaten ansprechbar ist;
Erzeugen eines Infrarot-Lichtsignals korrespondierend zu dem identifizierten Teil der Restlicht-Umgebung mit einer von dem Benutzer getragenen Infrarot-Lichtquelle, welche auf die Ausgangdaten von dem elektronischen Kontroller (911) anspricht;
Eingeben des erzeugten Infrarot-Lichtsignals in die Nachtsichtbrille (72) und Erzeugen von sichtbarem Licht zum Sehen durch den Benutzer mit der Nachtsichtbrille (72) in Reaktion auf das Infrarot-Lichtsignal.

15. Verfahren nach Anspruch 14, wobei der Schritt des Eingebens des erzeugten Infrarot-Lichtsignals in die Nachtsichtbrille (72) ein Scannen des Infrarot-Lichtsignals auf einen Bildverstärker (96 oder 112) der Nachtsichtbrille (72) umfasst.

16. Verfahren nach Anspruch 15, wobei der Schritt des Scannens des Infrarot-Lichtsignals auf einen Bildverstärker (96 oder 112) der Nachtsichtbrille (72) ein Resonanz-Scannen des Infrarot-Lichtsignals in einem im Wesentlichen Rastermuster umfasst.

## Revendications

1. Environnement d'entraînement à la vision de nuit (902), comprenant :
- un simulateur de vision de nuit portable incluant :
- une lunette de vision de nuit (72) ayant une entrée infrarouge (88),
- un affichage infrarouge (70) monté sur la lunette de vision de nuit (72) et ayant une sortie infrarouge (86) qui peut être aligné sur l'entrée infrarouge (88),
- un récepteur (904) couplé à l'affichage infrarouge (70) et configuré pour produire des signaux d'entrée pour l'affichage infrarouge (70),
- un contrôleur électronique (911) qui produit des signaux de contrôle pour le simulateur de vision de nuit portable, et
- un transmetteur ayant un signal d'entrée couplé au contrôleur électronique (911), le transmetteur étant configuré pour transmettre au récepteur (904) des signaux correspondant aux signaux de contrôle.

2. Environnement d'entraînement à la vision de nuit (902) selon la revendication 1, **caractérisé en ce que** l'affichage infrarouge (70) comprend :
- une source de lumière infrarouge modulée (80) sensible aux signaux d'entrée pour émettre de la lumière infrarouge, et
- un assemblage de scannage (84) aligné pour recevoir la lumière infrarouge émise et sensible pour scanner la lumière infrarouge reçue sur l'entrée (88) de la lunette de vision de nuit.

3. Environnement d'entraînement à la vision de nuit (902) selon la revendication 1, **caractérisé en ce que** l'affichage infrarouge (70) comprend :
- un émetteur infrarouge (604) sensible aux signaux d'entrée pour émettre de la lumière infrarouge, et
- un panneau LCD (602) sensible aux signaux d'entrée pour, sélectivement, transmettre la lumière infrarouge ou refléter la lumière infrarouge vers l'entrée (88) de la lunette de vision de nuit.

4. Environnement d'entraînement à la vision de nuit (902) selon la revendication 3, **caractérisé en ce que** l'affichage infrarouge (70) inclut un affichage d'émission de champ, l'affichage d'émission de champ incluant un écran émettant des infrarouges (814).

5. Environnement d'entraînement à la vision de nuit (902) selon la revendication 1, **caractérisé en ce que** le transmetteur est un transmetteur rf.

6. Environnement d'entraînement à la vision de nuit (902) selon la revendication 1, comprenant de plus :
- un deuxième simulateur de vision de nuit portable incluant :
- une deuxième lunette de vision de nuit (72) ayant une seconde entrée infrarouge (88),
- un second affichage infrarouge (70) monté sur la deuxième lunette de vision de nuit (72) et ayant une deuxième sortie infrarouge (86) qui peut être aligné sur la seconde entrée infrarouge (88), et
- un second récepteur couplé (904) au second affichage infrarouge (70) et configuré pour produire des signaux d'entrée respectifs pour le second affichage infrarouge (70).

7. Environnement d'entraînement à la vision de nuit (902) selon la revendication 6, **caractérisé en ce que** le contrôleur électronique (911) est programmé pour fournir des données indépendamment à chaque simulateur de vision de nuit portable.

8. Environnement d'entraînement à la vision de nuit (902) selon la revendication 1, **caractérisé en ce que** l'entrée infrarouge (88) de la lunette de vision de nuit (72) est capable de fonctionner pour recevoir de l'énergie infrarouge qui n'est pas visible pour un utilisateur sans une aide à la vision, la lunette de vision de nuit (72) étant sensible à l'énergie infrarouge pour fournir une lumière visible pour la vision par l'utilisateur, la lumière visible correspondant à l'énergie infrarouge reçue.

9. Environnement d'entraînement à la vision de nuit selon la revendication 2, **caractérisé en ce que** la source de lumière (80) inclut un laser infrarouge.

10. Environnement d'entraînement à la vision de nuit selon la revendication 9, comprenant de plus un modulateur externe aligné pour recevoir de la lumière depuis le laser et couplé pour recevoir un signal d'image depuis une source de signaux d'image (78), le modulateur étant sensible pour moduler la lumière reçue selon un signal d'image depuis la source de signaux d'image (78).

11. Environnement d'entraînement à la vision de nuit selon la revendication 9, **caractérisé en ce que** le laser infrarouge est une diode laser.

12. Environnement d'entraînement à la vision de nuit selon la revendication 2, **caractérisé en ce que** la source de lumière (80) inclut un émetteur ultraviolet.

13. Environnement d'entraînement à la vision de nuit selon la revendication 2, **caractérisé en ce que** la lunette de vision de nuit (72) présente une configuration montée sur tête incluant un support pouvant être monté sur tête et **en ce que** la source de lumière (80) est de taille et de configuration adaptées à l'attachement au support qui peut être monté sur tête.

14. Méthode de simulation d'opérations en environnement faiblement éclairé, comprenant les étapes suivantes :
- fournir une lunette de vision de nuit (72) portable et fermée à un utilisateur,
- fournir un contrôleur électronique (911),
- détecter une direction du regard de l'utilisateur,
- en réponse à la direction détectée du regard, identifier une portion de l'environnement faiblement éclairé, ledit contrôleur électronique (911) étant couplé pour recevoir un signal de traçage, indicatif de la direction détectée du regard et étant sensible au signal de traçage pour produire des données de sortie correspondant à une portion sélectionnée de l'image,
- produire un signal de lumière infrarouge correspondant à la portion identifiée de l'environnement faiblement éclairé avec une source infrarouge portée par l'utilisateur, qui est sensible aux données de sortie venant du contrôleur électronique (911),
- entrer le signal de lumière infrarouge produit dans la lunette de vision de nuit (72), et
- produire de la lumière visible pour la vision de l'utilisateur avec la lunette de vision de nuit (72), en réponse au signal de lumière infrarouge.

15. Méthode selon la revendication 14, **caractérisée en ce que** l'étape d'entrée du signal de lumière infrarouge produit dans la lunette de vision de nuit (72) inclut le scannage du signal de lumière infrarouge dans un intensificateur d'image (96 ou 112) de la lunette de vision de nuit (72).

16. Méthode selon la revendication 15, **caractérisée en ce que** l'étape de scannage du signal de lumière infrarouge dans un intensificateur d'image (96 ou 112) de la lunette de vision de nuit (72) inclut le scannage en résonance du signal de lumière infrarouge selon un modèle très proche du quadrillage.
